# FASCICULE DE BREVET EUROPEEN

(11) **EP 3 147 203 B1**
(45) Date de publication et mention de la délivrance du brevet: **14.02.2018**
(21) Numéro de dépôt: 16190212.7
(22) Date de dépôt: 22.09.2016
(51) Int. Cl.: B64C 1/14, B64D 29/06

(54) **DISPOSITIF DE VERROUILLAGE D'UN ELEMENT MOBILE TEL QU'UNE PORTE D'UN AERONEF ET AERONEF EQUIPE DUDIT DISPOSITIF DE VERROUILLAGE**
VERRIEGELUNGSVORRICHTUNG FÜR BEWEGBARE KOMPONENTEN, WIE ZUM BEISPIEL EINE TÜR EINES FLUGZEUGS UND FLUGZEUG MIT VERRIEGELUNGSVORRICHTUNG
LOCKING DEVICE FOR A MOVING COMPONENT SUCH AS A DOOR OF AN AIRCRAFT AND AIRCRAFT EQUIPPED WITH SAID LOCKING DEVICE

(30) Priorité: 25.09.2015 FR 1559034
(43) Date de publication de la demande: 29.03.2017
(73) Titulaire: Airbus, 31707 Blagnac (FR)
(72) Inventeur: RABOIS, Serge, 31280 DREMIL LAFAGE (FR)
(74) Mandataire: Fantin, Laurent

(56) Documents cités:
- WO-A1-2009/059808
- DE-A1- 19 825 405

## Description

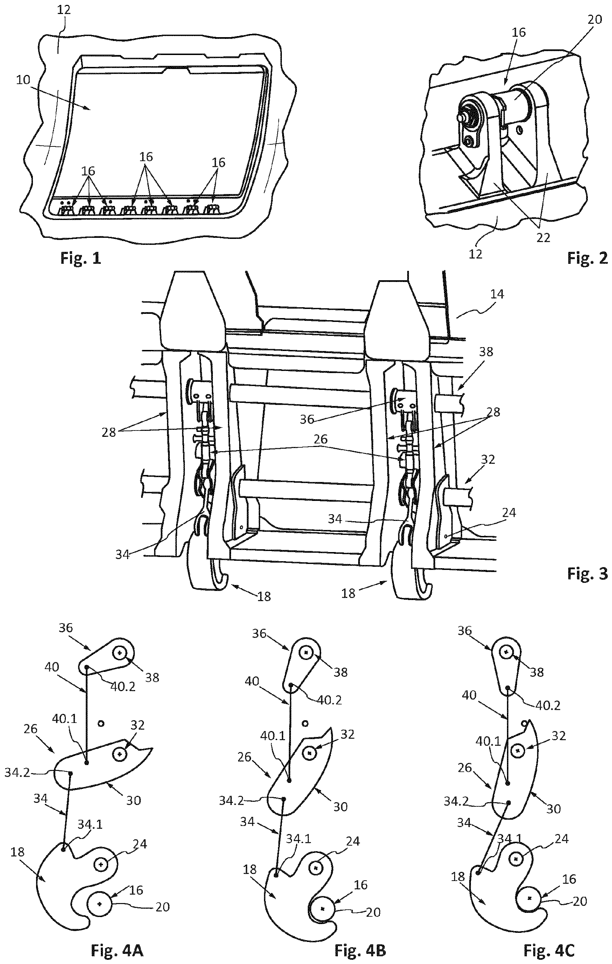

La présente invention se rapporte à un dispositif de verrouillage d'un élément mobile tel qu'une porte d'un aéronef ainsi qu'à un aéronef équipé dudit dispositif de verrouillage. Les documents WO2009/059808 et DE19825405 montrent des dispositifs de verrouillage connus de l'état de la technique. On a représenté sur la figure 1 une ouverture 10 dans un fuselage 12 d'un aéronef, sur la figure 3 une partie d'une porte 14 configurée pour obturer l'ouverture 10 et sur les figures 2, 3, 4A à 4C un mécanisme de verrouillage permettant de maintenir la porte 14 en position fermée.

Selon un mode de réalisation de l'art antérieur, le mécanisme de verrouillage comprend une gâche 16 solidaire du fuselage 12 et un crochet 18 solidaire de la porte 14.

La gâche 16 est fixe et comprend un cylindre 20 qui a un axe orienté selon une direction longitudinale et une chape 22 qui est solidaire du fuselage et qui supporte le cylindre 20. Comme illustré sur les figures 4A à 4C, le crochet 18 est mobile en rotation autour d'un premier arbre 24 dont l'axe est parallèle à la direction longitudinale, ledit crochet 18 étant mobile entre un état accroché (visible sur les figures 4B et 4C) dans lequel le crochet 18 coopère avec la gâche 16 de façon à maintenir la porte 14 dans la position fermée et un état décroché (visible sur la figure 4A) dans lequel le crochet 18 est écarté de la gâche 16 pour permettre à la porte 14 de s'ouvrir.

Selon un mode de réalisation visible sur les figures 4A à 4C, le mécanisme de verrouillage comprend également un système de commande 26 configuré pour faire pivoter le crochet 18 et le maintenir à l'état accroché, ledit système de commande 26 étant monté sur un support 28 fixé sur la porte 14.

Ce système de commande 26 comprend :
- une première commande 30 solidaire d'un arbre de blocage 32 monté pivotant sur le support 28 et orienté selon la direction longitudinale,
- une première biellette 34 qui est disposée dans un plan perpendiculaire à la direction longitudinale, une première extrémité 34.1 de la première biellette 34 étant reliée au crochet 18 et une seconde extrémité 34.2 de la première biellette 34 étant reliée à la première commande 30,

- une seconde commande 36 solidaire d'un arbre de verrouillage 38 monté pivotant sur le support 28 et orienté selon la direction longitudinale, et
- une seconde biellette 40 qui est disposée dans un plan perpendiculaire à la direction longitudinale, une première extrémité 40.1 de la seconde biellette 40 étant reliée à la première commande 30, la seconde extrémité 40.2 de la seconde biellette 40 étant reliée à la seconde commande 36.

Le système de commande 26 comprend des actionneurs pour contrôler le mouvement de rotation des arbres de blocage et de verrouillage 32, 38.

Les arbres 24, 32, 38 et les biellettes 34 et 40 sont agencés de manière à former un mécanisme à genouillère. Ainsi, le crochet 18 occupe successivement un état décroché visible sur la figure 4A, un état accroché non verrouillé visible sur la figure 4B et un état accroché et verrouillé visible sur la figure 4C.

Compte tenu de sa conception, un dispositif de verrouillage selon l'art antérieur est relativement complexe en raison du grand nombre de pièces et a une masse relativement importante lorsque le crochet 18 a des dimensions importantes dans la mesure où le système de commande 26 et le support 28 sont dimensionnés en fonction notamment des dimensions du crochet 18. Ces inconvénients sont d'autant plus préjudiciables dans le cas d'une porte d'une soute d'un aéronef, qu'elle comprend plusieurs mécanismes de verrouillage, chacun d'eux comprenant un crochet avec des dimensions importantes.

Aussi, la présente demande vise à remédier aux inconvénients de l'art antérieur.

A cet effet, l'invention a pour objet un dispositif de verrouillage d'un premier élément mobile d'un aéronef par rapport à un deuxième élément fixe, le dispositif de verrouillage comprenant une première partie solidaire d'un des deux éléments parmi l'élément mobile et l'élément fixe et une seconde partie solidaire de l'autre élément, la première partie comprenant un crochet avec un logement.

Selon l'invention, le dispositif de verrouillage se caractérise en ce que la seconde partie comprend :
- un premier arbre qui comporte une collerette avec une encoche et une section configurée pour coopérer avec le logement du crochet, le premier arbre étant mobile en rotation entre une position accrochée dans laquelle la section est logée dans le logement du crochet et une position décrochée dans laquelle la section est en dehors du logement du crochet, et
- un deuxième arbre qui comporte une section configurée pour coopérer avec l'encoche de la collerette, ledit deuxième arbre étant mobile en rotation entre une position verrouillée dans laquelle la section du deuxième arbre est logée dans l'encoche de la collerette du premier arbre de sorte que le premier arbre est immobilisé en rotation et une position déverrouillée dans laquelle la section du deuxième arbre est en dehors de l'encoche de la collerette du premier arbre de sorte que le premier arbre est libre en rotation.

L'invention permet d'obtenir un dispositif de verrouillage à double commande à partir d'éléments pivotants (les premier et deuxième arbres), sans biellette. Cette conception permet de réduire le nombre de pièces, et par conséquent, de simplifier le dispositif de verrouillage et de réduire sa masse.

Selon un autre avantage, le fait d'utiliser uniquement des éléments pivotants et de supprimer les biellettes permet d'obtenir un ensemble plus compact et de limiter les risques de dysfonctionnement en cas de gel.

Selon un autre avantage, la double commande formée par les premier et deuxième arbres n'étant plus reliée au crochet, son dimensionnement est indépendant de celui du crochet. Ceci contribue à réduire la masse du dispositif de verrouillage.

Enfin, le dispositif de verrouillage est compatible moyennant des adaptations mineures avec les actionneurs des dispositifs de verrouillage de l'art antérieur.

De préférence, la seconde partie comprend une chape qui comporte une base et le crochet comprend une extrémité avec une hauteur inférieure à la distance entre la base de la chape et la section du premier arbre lorsque ledit premier arbre est en position décrochée et supérieure à la distance entre la base de la chape et la section du premier arbre lorsque ledit premier arbre est en position accrochée.

Avantageusement, le crochet a une hauteur minimale égale à la distance entre la base et la section du premier arbre lorsque ledit premier arbre est en position accrochée.

Selon un mode de réalisation, la section du premier arbre est un demi-disque et le crochet comprend un chant périphérique qui comporte un profil avec un rayon égal au rayon de la section du premier arbre, ledit profil délimitant le logement du crochet.

De préférence, la base de la chape comprend une face qui est orientée vers le premier arbre et qui comprend au moins une cale pour ajuster la distance entre la base et la section du premier arbre.

Selon une autre caractéristique, la collerette comprend en périphérie une première portion cylindrique et une seconde portion cylindrique, la seconde portion cylindrique ayant un diamètre supérieur à celui de la première portion cylindrique, la première portion cylindrique et la seconde portion cylindrique étant séparées par l'encoche et une butée radiale.

Selon un mode de réalisation, l'encoche et la butée radiale sont diamétralement opposées.

Selon une autre caractéristique, la première partie du dispositif de verrouillage comprend un troisième arbre avec un axe parallèle aux axes des premier et deuxième arbres, ledit troisième arbre étant logé dans un alésage du crochet de sorte que ledit crochet pivote autour de l'axe du troisième arbre.

Avantageusement, le troisième arbre a un diamètre inférieur au diamètre de l'alésage du crochet et la première partie du dispositif de verrouillage comprend une bague avec un alésage excentré, intercalée entre le troisième arbre et l'alésage du crochet.

L'invention a également pour objet un aéronef qui comprend une ouverture fermée par une porte, l'ouverture et la porte étant équipées d'un dispositif de verrouillage selon l'invention. D'autres caractéristiques et avantages ressortiront de la description qui va suivre de l'invention, description donnée à titre d'exemple uniquement, en regard des dessins annexés sur lesquels :
- La figure 1 est une vue en perspective d'une ouverture prévue dans un fuselage d'un aéronef qui illustre un mode de réalisation de l'art antérieur,
- La figure 2 est une vue en perspective d'une partie du bord de l'ouverture qui illustre en détails un mode de réalisation d'une gâche d'un dispositif de verrouillage de l'art antérieur,
- La figure 3 est une vue en perspective d'une partie d'une porte d'un aéronef qui illustre un mode de réalisation d'un crochet et d'un système de commande d'un dispositif de verrouillage de l'art antérieur,
- Les figures 4A à 4C sont des schémas qui illustrent le fonctionnement d'un dispositif de verrouillage de l'art antérieur,
- La figure 5 est une vue en perspective d'une ouverture d'un aéronef équipée de dispositifs de verrouillage qui illustre l'invention,
- La figure 6 est une vue en perspective d'un crochet d'un dispositif de verrouillage fixé en bordure de l'ouverture de la figure 5 qui illustre en détails un mode de réalisation de l'invention,
- La figure 7 est une vue en perspective d'une partie d'une porte d'un aéronef équipée de dispositifs de verrouillage qui illustre l'invention,
- La figure 8 est un schéma dans un plan longitudinal d'un dispositif de verrouillage qui illustre l'invention,
- Les figures 9A et 9B sont des schémas dans des plans transversaux du dispositif de verrouillage de la figure 8 à l'état décroché et à l'état accroché et verrouillé,
- Les figures 10A à 10E sont des vues en perspective ou des coupes d'un dispositif de verrouillage qui illustrent son fonctionnement,
- La figure 11 est une vue en perspective d'une chape d'un dispositif de verrouillage qui illustre un mode de réalisation de l'invention,
- La figure 12 est une vue en perspective d'un premier arbre d'un dispositif de verrouillage qui illustre un mode de réalisation de l'invention,
- La figure 13 est une vue en perspective d'un deuxième arbre d'un dispositif de verrouillage qui illustre un mode de réalisation de l'invention, et
- La figure 14 est une coupe transversale d'un dispositif de verrouillage qui illustre un mode de réalisation du crochet.

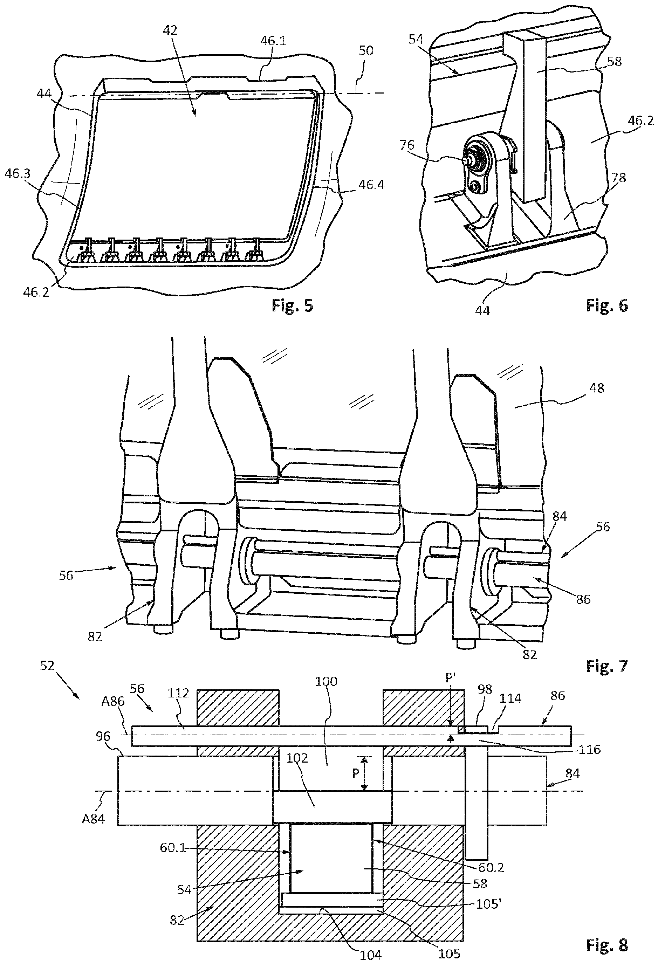

Sur la figure 5, on a représenté une ouverture 42 dans un fuselage 44 d'un aéronef. A titre d'exemple, cette ouverture 42 est configurée pour permettre d'accéder à une soute d'un aéronef.

Cette ouverture 42 est sensiblement rectangulaire avec des angles arrondis et est délimitée par un premier bord 46.1, un deuxième bord 46.2 parallèle au premier bord 46.1, un troisième bord 46.3 et un quatrième bord 46.4 parallèle au troisième bord 46.3.

Sur la figure 6, on a représenté une partie d'une porte 48 configurée pour obturer l'ouverture 42 en position fermée.

Selon un mode de réalisation, la porte 48 est reliée au premier bord 46.1 de l'ouverture par une liaison pivotante matérialisée par un axe 50 sur la figure 5.

L'aéronef comprend au moins un dispositif de verrouillage 52 pour maintenir la porte 48 en position fermée. Comme illustré sur la figure 5, dans le cas d'une porte d'une soute d'aéronef, une pluralité de dispositifs de verrouillage (dans l'exemple représenté huit dispositifs) sont prévus.

Chaque dispositif de verrouillage 52 comprend une première partie 54 solidaire du fuselage 44 (visible sur la figure 6) et une seconde partie 56 solidaire de la porte 48 (visible sur la figure 7).

La première partie 54 comprend un crochet 58.

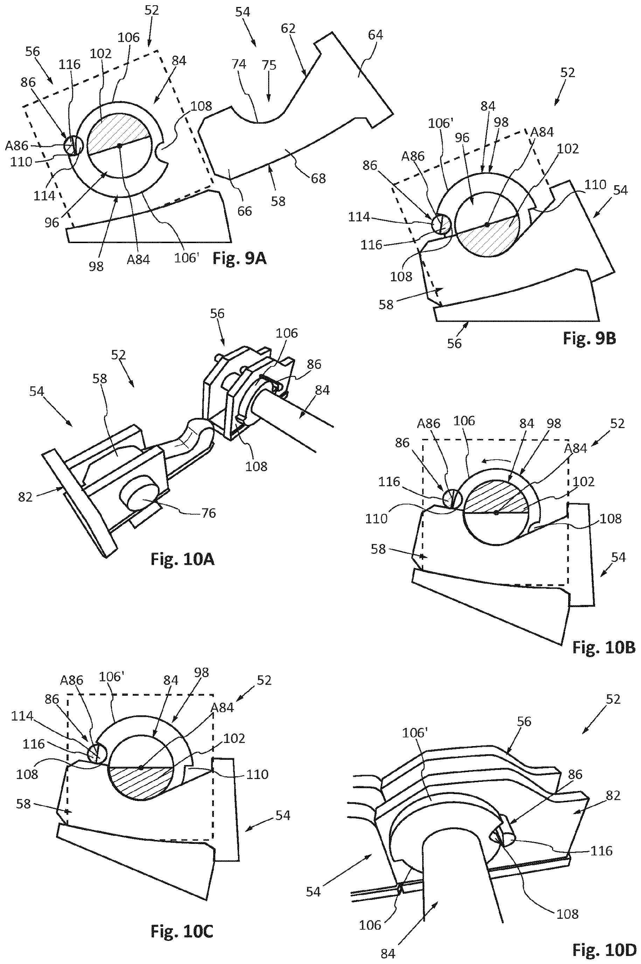

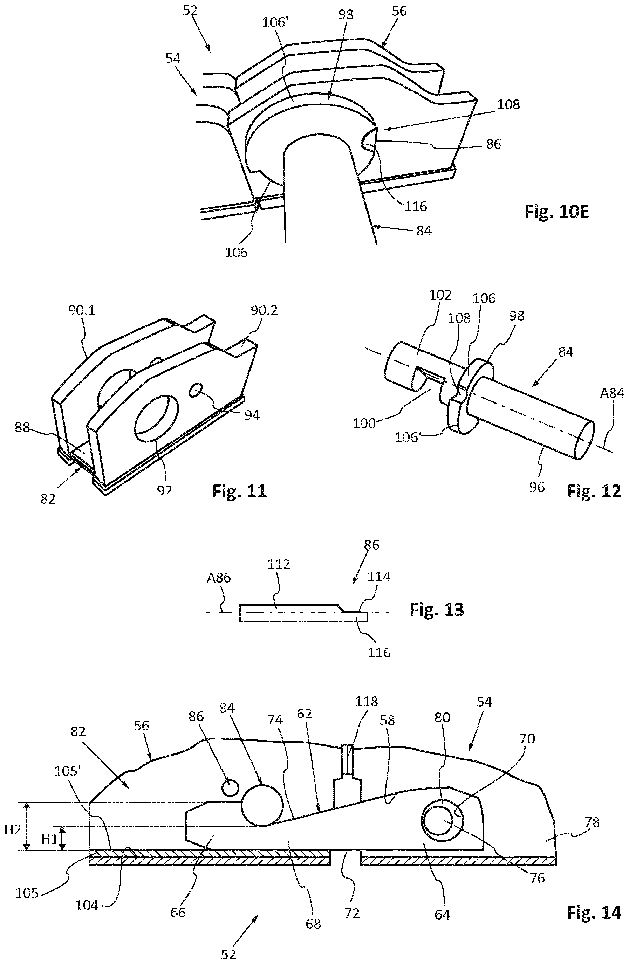

Selon un mode de réalisation, le crochet 58 est délimité par deux faces 60.1 et 60.2 (référencées sur la figure 8) parallèles et disposées dans des plans transversaux et un chant périphérique 62 (visible notamment sur les figures 9A et 14) qui s'étend entre les deux faces 60.1 et 60.2, perpendiculairement auxdites faces 60.1 et 60.2.

Pour la suite de la description, une direction longitudinale est une direction perpendiculaire aux faces 60.1 et 60.2 du crochet. Un plan transversal est un plan perpendiculaire à la direction longitudinale. Un arbre est une pièce de révolution et un axe correspond à une ligne imaginaire autour de laquelle pivote une pièce.

De préférence, l'axe 50 de la liaison pivotante entre la porte et le fuselage est orienté parallèlement à la direction longitudinale.

Comme illustré sur la figure 14, le crochet 58 comprend un corps 64, une extrémité 66 et une portion intercalaire 68 positionnée entre le corps 64 et l'extrémité 66. La portion intercalaire 68 a une hauteur minimale H1 inférieure à une hauteur H2 de l'extrémité 66. Une hauteur correspond à la dimension du crochet dans un plan transversal.

Le corps 64 comprend un alésage 70 qui débouche au niveau des deux faces 60.1 et 60.2.

Selon une configuration, le chant périphérique 62 comprend une première partie 72 plane qui s'étend du corps 64 jusqu'à l'extrémité 66 et une deuxième partie 74 courbe et concave qui s'étend également du corps 64 jusqu'à l'extrémité 66. Cette deuxième partie 74 délimite un logement 75 visible notamment sur la figure 9A.

Selon un mode de réalisation visible sur la figure 8 par exemple, la seconde partie 56 du dispositif de verrouillage comprend une chape 82, un premier arbre 84 configuré pour immobiliser le crochet 58 et un deuxième arbre 86 configuré pour immobiliser en rotation le premier arbre 84. Les premier et deuxième arbres 84 et 86 sont supportés par la chape 82. Les premier et deuxième arbres 84 et 86 ont des axes A84 et A86 parallèles entre eux et parallèles à la direction longitudinale.

Selon un mode de réalisation visible sur la figure 11, la chape 82 comprend une base 88 et deux ailes 90.1 et 90.2 parallèles entre elles et positionnées dans des plans transversaux. Les deux ailes 90.1 et 90.2 sont espacées d'une distance supérieure à l'épaisseur du crochet 58 pour lui permettre de pénétrer entre les deux ailes 90.1 et 90.2. L'épaisseur du crochet 58 correspond à une dimension du crochet 58 prise selon la direction longitudinale.

Chaque aile 90.1 et 90.2 comprend un premier alésage 92 qui forme un palier pour le premier arbre 84 et un second alésage 94 qui forme un palier pour le deuxième arbre 86.

Selon un mode de réalisation visible sur la figure 12, le premier arbre 84 comprend un corps 96 cylindrique qui a un diamètre égal à celui des premiers alésages 92 des ailes 90.1 et 90.2, une collerette 98 qui a un diamètre supérieur à celui du corps 96 et qui s'étend dans un plan perpendiculaire à la direction longitudinale et une entaille 100.

L'entaille 100 a une longueur supérieure ou égale à l'épaisseur du crochet 58. De préférence, l'entaille a une longueur sensiblement égale à la distance qui sépare les deux ailes 90.1 et 90.2. De préférence, l'entaille 100 a une profondeur P (visible sur la figure 8) sensiblement égale au rayon du corps 96. Ainsi, au niveau de l'entaille 100, le corps 96 a une section restante 102 en forme de demi-disque.

L'entaille 100 est séparée de la collerette 98 d'une distance sensiblement égale à l'épaisseur de l'aile 90.1 ou 90.2 contre laquelle est plaquée la collerette 98 en fonctionnement.

Le premier arbre 84 est monté pivotant dans les premiers alésages 92 des ailes 90.1 et 90.2 et occupe alternativement, en fonction de sa position angulaire, une position décrochée dans laquelle l'entaille 100 est orientée vers la base 88 de la chape 82 et une position accrochée dans laquelle la section restante 102 du premier arbre 84 est orientée vers la base 88 de la chape 82.

Le premier arbre 84 est séparé de la base 88 de la chape 82 d'une distance telle que :
- dans la position décrochée, la hauteur H2 de l'extrémité 66 du crochet 58 est inférieure à la distance entre la base 88 de la chape 82 et la section restante 102 du premier arbre 84, et
- dans la position accrochée, la hauteur H2 de l'extrémité 66 du crochet 58 est supérieure à la distance entre la base 88 de la chape 82 et la section restante 102 du premier arbre 84.

De préférence, en position accrochée, la hauteur minimale H1 de la portion intercalaire 68 du crochet 58 est sensiblement égale à la distance entre la base 88 et la section restante 102 du premier arbre 84. Cette configuration permet de limiter les débattements du crochet 58 dans la position accrochée. Selon un mode de réalisation, la deuxième partie 74 courbe et concave du chant périphérique 62 du crochet 58 comprend un profil cylindrique avec un rayon égal à celui du corps 96 du premier arbre 84.

Comme illustré sur la figure 14, la base 88 de la chape 82 comprend une face 104 orientée vers le premier arbre 84. Avantageusement, cette face 104 comprend au moins une cale 105 pour ajuster la distance entre la base 88 et le premier arbre 84 à la hauteur minimale H1 de la portion intercalaire 68 du crochet 58.

De préférence, cette face 104 de la base 88 comprend un revêtement 105', comme par exemple une garniture d'usure, appliqué directement sur la face 104 en l'absence de cale 105 ou sur la cale 105.

La collerette 98 du premier arbre 84 comprend en périphérie au moins une portion cylindrique 106 et au moins une encoche 108. De préférence, la collerette 98 comprend une unique encoche 108 qui correspond à la position accrochée.

Selon un mode de réalisation visible sur les figures 9A et 9B, la collerette 98 comprend en périphérie une première portion cylindrique 106 et une seconde portion cylindrique 106', la seconde portion cylindrique 106' ayant un diamètre supérieur à celui de la première portion cylindrique 106. La première portion cylindrique 106 s'étend de l'encoche 108 jusqu'à une butée radiale 110 et la seconde portion cylindrique 106' s'étend de l'encoche 108 jusqu'à la butée radiale 110. L'encoche 108 et la butée radiale 110 sont approximativement diamétralement opposées.

Selon un mode de réalisation visible sur la figure 13, le deuxième arbre 86 comprend un corps 112 cylindrique et une entaille 114.

L'entaille 114 a une longueur supérieure ou égale à l'épaisseur de la collerette 98.

De préférence, l'entaille 114 a une profondeur P' (visible sur la figure 8) sensiblement égale au rayon du corps 112. Ainsi, au niveau de l'entaille 114, le corps 112 a une section restante 116 en forme de demi-disque.

Le deuxième arbre 86 est monté pivotant dans les seconds alésages 94 prévus dans les ailes 90.1 et 90.2 et occupe alternativement, en fonction de sa position angulaire, une position déverrouillée dans laquelle l'entaille 114 est orientée vers le premier arbre 84 et une position verrouillée dans laquelle la section restante 116 du deuxième arbre 86 est orientée vers le premier arbre 84.

Comme illustré sur les figures 9A et 9B, l'axe A86 du deuxième arbre 86 est séparé de l'axe A84 du premier arbre 84 d'une distance égale au rayon de la première portion cylindrique 106 de la collerette 98 du premier arbre 84 augmentée d'un léger jeu de fonctionnement. Ainsi, dans la position verrouillée, la section restante 116 du deuxième arbre 86 se loge et coopère avec l'encoche 108 de la collerette 98 du premier arbre 84 de sorte à l'immobiliser en rotation, et dans la position déverrouillée, la section restante 116 du deuxième arbre 86 ne coopère plus avec l'encoche 108 de la collerette 98 du premier arbre 84 de sorte que ce dernier peut pivoter de la position accrochée à la position décrochée ou vice versa. Avantageusement, l'axe A86 du deuxième arbre 86 est séparé de l'axe A84 du premier arbre 84 d'une distance inférieure au rayon de la seconde portion cylindrique 106' de la collerette 98 du premier arbre 84. Ainsi, dans la position décrochée, la section restante 116 du deuxième arbre 86 est en contact avec la butée radiale 110 de la collerette 98.

Pour assurer un fonctionnement optimal, au moins une cale compressible 118 est intercalée entre les première et deuxième parties du dispositif de verrouillage, comme illustré sur la figure 14.

Le principe de fonctionnement du dispositif de verrouillage est décrit au regard des figures 10A à 10E.

Comme illustré sur la figure 10A, préalablement à l'accrochage du crochet 58, le deuxième arbre 86 est disposé en position déverrouillé et le premier arbre 84 est disposé en position décrochée.

Le crochet 58 est introduit entre la base 88 de la chape 82 et le premier arbre 84 jusqu'à ce que la portion intercalaire 68 du crochet 58 soit positionnée entre la base 88 de la chape 82 et le premier arbre 84, comme illustré sur la figure 10B.

Après pivotement du premier arbre 84 en position accrochée, le crochet 58 est à l'état accroché et ne peut plus se décrocher. Le crochet 58 n'est pas à l'état verrouillé car le deuxième arbre 86 n'est pas en position verrouillée, comme illustré sur la figure 10C et 10D. Après pivotement du deuxième arbre 86 en position verrouillée, comme illustré sur la figure 10E, le premier arbre 84 ne peut plus pivoter et le crochet 58 est à l'état accroché et verrouillé.

Pour déverrouiller le dispositif de verrouillage, le deuxième arbre 86 est mis en rotation jusqu'à la position déverrouillée, En suivant, le premier arbre 84 est mis en rotation jusqu'à la position décrochée. Le crochet 58 peut alors se désengager du premier arbre 84.

En présence de plusieurs dispositifs de verrouillage, selon une première variante, chaque dispositif de verrouillage comprend un premier arbre 84 et un deuxième arbre 86 indépendants respectivement des premiers arbres et des deuxièmes arbres des autres dispositifs de verrouillage. Selon une autre variante, le premier arbre 84 et/ou le deuxième arbre 86 sont communs à plusieurs dispositifs de verrouillage comme illustré sur la figure 7. Le dispositif de verrouillage comprend également au moins un actionneur pour modifier la position angulaire du premier arbre 84 et au moins un actionneur pour modifier la position angulaire du deuxième arbre 86. Selon un mode de réalisation, les actionneurs et moyens de rappel sont identiques à ceux utilisés pour faire pivoter les arbres de blocage et de verrouillage des dispositifs de l'art antérieur.

Quelle que soit la variante, la première partie 54 du dispositif de verrouillage comprend un crochet 58 qui comporte un logement 75. La seconde partie 56 du dispositif de verrouillage comprend une collerette 98 avec au moins une encoche 108 et un premier arbre 84 qui comporte une section 102 configurée pour coopérer avec le logement 75 du crochet 58. De plus, le premier arbre 84 est mobile en rotation entre une position accrochée dans laquelle la section 102 est logée dans le logement 75 de sorte que la première partie 54 du dispositif de verrouillage est immobilisée par rapport à la seconde partie 56 du dispositif de verrouillage et une position décrochée dans laquelle la section 102 est en dehors du logement 75 de sorte que la première partie 54 du dispositif de verrouillage est mobile par rapport à la seconde partie 56 du dispositif de verrouillage.

En complément, le dispositif de verrouillage comprend un deuxième arbre 86 qui comporte une section 116 qui est configurée pour coopérer avec la collerette 98 du premier arbre 84, ledit deuxième arbre 86 étant mobile en rotation entre une position verrouillée dans laquelle la section 116 du deuxième arbre 86 est logée dans l'encoche 108 de la collerette 98 du premier arbre 84 de sorte que le premier arbre 84 est immobilisé en rotation et une position déverrouillée dans laquelle la section 116 du deuxième arbre 86 est en dehors de l'encoche 108 de la collerette 98 du premier arbre 84 de sorte que le premier arbre 84 est libre en rotation.

L'invention permet d'obtenir un dispositif de verrouillage à double commande à partir d'éléments pivotants (les premier et deuxième arbres), sans biellette.

Cette conception procure les avantages suivants :
- une simplification et une réduction de la masse du dispositif de verrouillage en raison de la réduction du nombre de pièces,
- un ensemble plus compact et moins sensible au gel en raison de la suppression des biellettes et de l'utilisation d'éléments pivotants,
- une réduction de la masse du dispositif de verrouillage lorsque le crochet a des dimensions importantes du fait que la double commande formée par les premier et deuxième arbres n'est plus reliée au crochet comme pour l'art antérieur,
- une compatibilité avec les actionneurs des dispositifs de verrouillage de l'art antérieur moyennant des adaptations mineures.

Selon les variantes, le crochet 58 peut être fixe ou mobile.

Selon une première variante non représentée, le crochet 58 est fixe par rapport au fuselage. Selon d'autres variantes, comme illustré sur les figures 6, 10A à 10E et 14, le crochet 58 est supporté par un troisième arbre 76 qui se loge dans l'alésage 70 du crochet 58 et qui comprend un axe A76 orienté parallèlement à la direction longitudinale. Le troisième arbre 76 est monté sur une chape 78 solidaire du second bord 46.2 de l'ouverture 42.

Ainsi en fonctionnement, le crochet 58 pivote autour de l'axe A76 du troisième arbre 76. Selon un premier mode de réalisation, le troisième arbre 76 a un diamètre égal à celui de l'alésage 70. Dans ce cas, le crochet 58 peut uniquement pivoter autour de l'axe A76 du troisième arbre 76.

Selon un deuxième mode de réalisation visible sur la figure 14, le troisième arbre 76 a un diamètre inférieur à celui de l'alésage 70 et une bague 80 avec un alésage excentré est intercalée entre le troisième arbre 76 et l'alésage 70. Ce mode de réalisation autorise, en plus du mouvement de rotation autour de l'axe A76 du troisième arbre 76, un léger débattement du troisième arbre 76 permettant au crochet 58 de se positionner automatiquement par rapport à la seconde partie 56 du dispositif de verrouillage solidaire de la porte 48.

Bien entendu, l'invention n'est pas limitée au mode de réalisation décrit précédemment. Ainsi, le crochet 58 peut être relié indifféremment à la porte ou au fuselage. De même, l'utilisation du dispositif de verrouillage n'est pas limitée au verrouillage d'une porte. Ainsi, il peut être utilisé pour verrouiller un premier élément mobile d'un aéronef par rapport à un deuxième élément fixe.

## Revendications

1. Dispositif de verrouillage d'un premier élément mobile (48) d'un aéronef par rapport à un deuxième élément fixe (44), le dispositif de verrouillage comprenant une première partie (54) solidaire d'un des deux éléments parmi l'élément mobile (48) et l'élément fixe (44) et une seconde partie (56) solidaire de l'autre élément, la première partie (54) comprenant un crochet (58) avec un logement (75), ledit dispositif de verrouillage étant **caractérisé en ce que** la seconde partie (56) comprend :
- un premier arbre (84) qui comporte une collerette (98) avec une encoche (108) et une section (102) configurée pour coopérer avec le logement (75) du crochet (58), le premier arbre (84) étant mobile en rotation entre une position accrochée dans laquelle la section (102) est logée dans le logement (75) du crochet (58) et une position décrochée dans laquelle la section (102) est en dehors du logement (75) du crochet (58), et
- un deuxième arbre (86) qui comporte une section (116) configurée pour coopérer avec l'encoche (108) de la collerette (98), ledit deuxième arbre (86) étant mobile en rotation entre une position verrouillée dans laquelle la section (116) du deuxième arbre (86) est logée dans l'encoche (108) de la collerette (98) du premier arbre (84) de sorte que le premier arbre (84) est immobilisé en rotation et une position déverrouillée dans laquelle la section (116) du deuxième arbre (86) est en dehors de l'encoche (108) de la collerette (98) du premier arbre (84) de sorte que le premier arbre (84) est libre en rotation.

2. Dispositif de verrouillage selon la revendication 1, **caractérisé en ce que** la seconde partie (56) comprend une chape (82) qui comporte une base (88) et **en ce que** le crochet (58) comprend une extrémité (66) avec une hauteur (H2) inférieure à la distance entre la base (88) de la chape (82) et la section (102) du premier arbre (84) lorsque ledit premier arbre (84) est en position décrochée et supérieure à la distance entre la base (88) de la chape (82) et la section (102) du premier arbre (84) lorsque ledit premier arbre (84) est en position accrochée.

3. Dispositif de verrouillage selon la revendication 2, **caractérisé en ce que** le crochet (58) a une hauteur minimale (H1) égale à la distance entre la base (88) et la section (102) du premier arbre (84) lorsque ledit premier arbre (84) est en position accrochée.

4. Dispositif de verrouillage selon la revendication 3, **caractérisé en ce que** la section (102) du premier arbre (84) est un demi-disque et **en ce que** le crochet (58) comprend un chant périphérique (62) qui comporte un profil avec un rayon égal au rayon de la section (102) du premier arbre (84), ledit profil délimitant le logement (75) du crochet (58).

5. Dispositif de verrouillage selon l'une des revendications 2 à 4, **caractérisé en ce que** la base (88) de la chape (82) comprend une face (104) qui est orientée vers le premier arbre (84) et qui comprend au moins une cale (105) pour ajuster la distance entre la base (88) et la section (102) du premier arbre (84).

6. Dispositif de verrouillage selon l'une des revendications précédentes, **caractérisé en ce que** la collerette (98) comprend en périphérie une première portion cylindrique (106) et une seconde portion cylindrique (106'), la seconde portion cylindrique (106') ayant un diamètre supérieur à celui de la première portion cylindrique (106), la première portion cylindrique (106) et la seconde portion cylindrique (106') étant séparées par l'encoche (108) et une butée radiale (110).

7. Dispositif de verrouillage selon la revendication précédente, **caractérisé en ce que** l'encoche (108) et la butée radiale (110) sont diamétralement opposées.

8. Dispositif de verrouillage selon l'une des revendications précédentes, **caractérisé en ce que** la première partie (54) du dispositif de verrouillage comprend un troisième arbre (76) avec un axe (A76) parallèle aux axes (A84, A86) des premier et deuxième arbres (84, 86), ledit troisième arbre (76) étant logé dans un alésage (70) du crochet (58) de sorte que ledit crochet (58) pivote autour de l'axe (A86) du troisième arbre (76).

9. Dispositif de verrouillage selon la revendications précédente, **caractérisé en ce que** le troisième arbre (76) a un diamètre inférieur au diamètre de l'alésage (70) du crochet (58) et **en ce que** la première partie (54) du dispositif de verrouillage comprend une bague (80) avec un alésage excentré intercalée entre le troisième arbre (76) et l'alésage (70) du crochet (58).

10. Aéronef comprenant une ouverture fermée par une porte, l'ouverture et la porte étant équipées d'un dispositif de verrouillage selon l'une des revendications précédentes.

## Patentansprüche

1. Verriegelungsvorrichtung eines bewegbaren ersten Elements (48) eines Luftfahrzeugs bezüglich eines festen zweiten Elements (44), wobei die Verriegelungsvorrichtung einen ersten Abschnitt (54) umfasst, der an einem der beiden Elemente aus der Gruppe des bewegbaren Elements (48) und des festen Elements (44) angebracht ist, und einen zweiten Abschnitt (56) umfasst, der an dem anderen Element angebracht ist, wobei der erste Abschnitt (54) einen Haken (58) mit einer Aufnahme (75) aufweist und die Verriegelungsvorrichtung **dadurch gekennzeichnet ist, dass** der zweite Abschnitt (56) versehen ist mit:
- einer ersten Welle (84), die einen Kragenring (98) mit einem Einzug (108) und einen Teilabschnitt (102) aufweist, der dazu eingerichtet ist, mit der Aufnahme (75) des Hakens (58) zusammenzuwirken, wobei die erste Welle (84) zwischen einer eingekoppelten Stellung, in der sich der Teilabschnitt (102) in der Aufnahme (75) des Hakens (58) befindet, und einer entkoppelten Stellung verdrehbar ist, in der sich der Teilabschnitt (102) außerhalb der Aufnahme (75) des Hakens (58) befindet, und
- einer zweiten Welle (86), die einen Teilabschnitt (116) aufweist, der dazu eingerichtet ist, mit dem Einzug (108) des Kragenrings (98) zusammenzuwirken, wobei die zweite Welle (86) zwischen einer verriegelten Stellung, in der sich der Teilabschnitt (116) der zweiten Welle (86) im Einzug (108) des Kragenrings (98) der ersten Welle (84) derart befindet, dass die erste Welle (84) gegen ein Verdrehen gesichert ist, und einer entriegelten Stellung verdrehbar ist, in der sich der Teilabschnitt (116) der zweiten Welle (86) außerhalb des Einzugs (108) des Kragenrings (98) der ersten Welle (84) derart befindet, dass die erste Welle (84) frei drehbar ist.

2. Verriegelungsvorrichtung nach Anspruch 1, **dadurch gekennzeichnet, dass** der zweite Abschnitt (56) einen Gabelkopf (82) umfasst, der eine Basis (88) aufweist, und dass der Haken (58) ein Ende (66) mit einer Höhe (H2) aufweist, die kleiner als der Abstand zwischen der Basis (88) des Gabelkopfes (82) und dem Teilabschnitt (102) der ersten Welle (84) ist, wenn sich die erste Welle (84) in der entkoppelten Stellung befindet, und größer als der Abstand zwischen der Basis (88) des Gabelkopfes (82) und dem Teilabschnitt (102) der ersten Welle (84) ist, wenn sich die erste Welle (84) in der eingekoppelten Stellung ist.

3. Verriegelungsvorrichtung nach Anspruch 2, **dadurch gekennzeichnet, dass** der Haken (58) eine minimale Höhe (H1) hat, die gleich dem Abstand zwischen der Basis (88) und dem Teilabschnitt (102) der ersten Welle (84) ist, wenn die erste Welle (84) in der eingekoppelten Stellung ist.

4. Verriegelungsvorrichtung nach Anspruch 3, **dadurch gekennzeichnet, dass** der Teilabschnitt (102) der ersten Welle (84) eine Halbscheibe ist und dass der Haken (58) eine äußere Schmalseite (62) umfasst, die ein Profil mit einem Radius aufweist, der gleich dem Radius des Teilabschnitts (102) der ersten Welle (84) ist, wobei das Profil die Aufnahme (75) des Hakens (58) begrenzt.

5. Verriegelungsvorrichtung nach einem der Ansprüche 2 bis 4, **dadurch gekennzeichnet, dass** die Basis (88) des Gabelkopfes (82) eine Seite (104) aufweist, die der ersten Welle (84) zugewandt ist, und die wenigstens ein Unterlegteil (105) aufweist, um den Abstand zwischen der Basis (88) und dem Teilabschnitt (102) der ersten Welle (84) einzustellen.

6. Verriegelungsvorrichtung nach einem der vorhergehenden Ansprüche, **dadurch gekennzeichnet, dass** der Kragenring (98) entlang seinem Umfang einen ersten zylindrischen Abschnitt (106) und einen zweiten zylindrischen Abschnitt (106') aufweist, wobei der zweite zylindrische Abschnitt (106') einen Durchmesser aufweist, der größer als derjenige des ersten zylindrischen Abschnitts (106) ist und wobei der erste zylindrische Abschnitt (106) und der zweite zylindrische Abschnitt (106') durch den Einzug (108) und einen radialen Anschlag (110) getrennt sind.

7. Verriegelungsvorrichtung nach einem der vorhergehenden Ansprüche, **dadurch gekennzeichnet, dass** der Einzug (108) und der radiale Anschlag (110) diametral entgegengesetzt sind.

8. Verriegelungsvorrichtung nach einem der vorhergehenden Ansprüche, **dadurch gekennzeichnet, dass** der erste Abschnitt (54) der Verriegelungsvorrichtung eine dritte Welle (76) mit einer Achse (A76) aufweist, die parallel zu den Achsen (A84, A86) der ersten und zweiten Welle (84, 86) ist, wobei die dritte Welle (76) in einer Durchführung (70) des Hakens (58) derart gelagert ist, dass der Haken (58) um die Achse (A86) der dritten Welle (76) verschwenkt.

9. Verriegelungsvorrichtung nach dem vorhergehenden Anspruch, **dadurch gekennzeichnet, dass** die dritte Welle (76) einen Durchmesser aufweist, der kleiner als der Durchmesser der Durchführung (70) des Hakens (58) ist und dass der erste Abschnitt (54) der Verriegelungsvorrichtung einen Ring (80) mit einer exzentrischen Durchführung aufweist, der zwischen der dritten Welle (76) und der Durchführung (70) des Hakens (58) angeordnet ist.

10. Luftfahrzeug mit einer durch eine Tür geschlossenen Öffnung, wobei die Öffnung und die Tür mit einer Verriegelungsvorrichtung nach einem der vorhergehenden Ansprüche ausgestattet sind.

## Claims

1. Device for locking a first mobile element (48) of an aircraft in relation to a second fixed element (44), the locking device including a first part (54) integral with one of the two elements among the mobile element (48) and the fixed element (44), and a second part (56) integral with the other element, the first part (54) including a hook (58) with a housing (75), said locking device being **characterized in that** the second part (56) includes:
- a first shaft (84), which incorporates a flange (98) with a notch (108) and a section (102) configured for cooperating with the housing (75) of the hook (58), the first shaft (84) being rotationally mobile between a hooked position, in which the section (102) is accommodated in the housing (75) of the hook (58) and an unhooked position in which the section (102) is outside the housing (75) of the hook (58), and
- a second shaft (86), which incorporates a section (116) configured for cooperating with the notch (108) in the flange (98), said second shaft (86) being rotationally mobile between a locked position, in which the section (116) of the second shaft (86) is accommodated in the notch (108) in the flange (98) of the first shaft (84) such that the rotation of the first shaft (84) is immobilized, and an unlocked position, in which the section (116) of the second shaft (86) is outside the notch (108) in the flange (98) of the first shaft (84) such that the first shaft (84) is free to rotate.

2. Locking device according to Claim 1, **characterized in that** the second part (56) includes a clevis (82), which incorporates a base (88), and **in that** the hook (58) includes an extremity (66) with a height (H2) smaller than the distance between the base (88) of the clevis (82) and the section (102) of the first shaft (84) when said first shaft (84) is in the unhooked position, and greater than the distance between the base (88) of the clevis (82) and the section (102) of the first shaft (84) when said first shaft (84) is in the hooked position.

3. Locking device according to Claim 2, **characterized in that** the hook (58) has a minimum height (H1) equal to the distance between the base (88) and the section (102) of the first shaft (84) when said first shaft (84) is in the hooked position.

4. Locking device according to Claim 3, **characterized in that** the section (102) of the first shaft (84) is a half disc and **in that** the hook (58) includes a peripheral edge (62), which incorporates a profile with a radius equal to the radius of the section (102) of the first shaft (84), said profile delimiting the housing (75) of the hook (58).

5. Locking device according to one of Claims 2 to 4, **characterized in that** the base (88) of the clevis (82) includes a side (104), which is oriented towards the first shaft (84) and which includes at least one shim (105) for adjusting the distance between the base (88) and the section (102) of the first shaft (84).

6. Locking device according to one of the preceding claims, **characterized in that** the flange (98) includes, at the periphery, a first cylindrical portion (106) and a second cylindrical portion (106'), the second cylindrical portion (106') having a diameter greater than that of the first cylindrical portion (106), the first cylindrical portion (106) and the second cylindrical portion (106') being separated by the notch (108) and a radial stop (110).

7. Locking device according to the preceding claim, **characterized in that** the notch (108) and the radial stop (110) are diametrically opposite.

8. Locking device according to one of the preceding claims, **characterized in that** the first part (54) of the locking device includes a third shaft (76) with an axis (A76) parallel to the axes (A84, A86) of the first and second shafts (84, 86), said third shaft (76) being accommodated in a bore (70) of the hook (58) such that said hook (58) pivots around the axis (A76) of the third shaft (76).

9. Locking device according to the preceding claim, **characterized in that** the third shaft (76) has a diameter smaller than the diameter of the bore (70) of the hook (58) and **in that** the first part (54) of the locking device includes a ring (80) with an eccentric bore interposed between the third shaft (76) and the bore (70) of the hook (58).

10. Aircraft including an opening closed by a door, the opening and the door being equipped with a locking device according to one of the preceding claims.
